# EUROPEAN PATENT APPLICATION

(11) **EP 4 764 857 A1**
(43) Date of publication of application: **24.06.2026**
(21) Application number: 24869944.9
(22) Date of filing: 02.07.2024
(51) Int. Cl.: G06F 9/50

(54) **METHOD AND APPARATUS FOR PROCESSING ZERO PAGE IN PHYSICAL MEMORY, AND DEVICE AND STORAGE MEDIUM**

(30) Priority: 27.09.2023 CN 202311279721
(71) Applicant: HUAWEI TECHNOLOGIES CO., LTD., Shenzhen 518129 (CN)
(72) Inventor: WU, Bin, Shenzhen, Guangdong 518129 (CN); GAO, Wei, Shenzhen, Guangdong 518129 (CN); WANG, Zhigang, Shenzhen, Guangdong 518129 (CN); ZHANG, Wei, Shenzhen, Guangdong 518129 (CN); XU, Yandong, Shenzhen, Guangdong 518129 (CN)
(74) Representative: Goddar, Heinz J.
(86) International application number: PCT/CN2024/103104
(87) International publication number: WO 2025/066387

(57) **Abstract**

Embodiments of the present disclosure provide a method and an apparatus for processing a zero page in physical memory, a device, and a storage medium, which relate to the field of computer technologies. In embodiments of the present disclosure, when an operation for generating a zero page is identified, the zero page corresponding to the operation is determined, and the zero page is marked. In addition, a page with a zero-page flag is detected in physical memory pages and is reclaimed. Therefore, corresponding physical memory may be released to reduce physical memory usage, thereby preventing host operation lag.

## Description

The present disclosure claims priority to Chinese Patent Application No. 202311279721.6, filed on September 27, 2023 and entitled "METHOD AND APPARATUS FOR PROCESSING ZERO PAGE IN PHYSICAL MEMORY, DEVICE, AND STORAGE MEDIUM", which is incorporated herein by reference in its entirety.

### TECHNICAL FIELD

The present disclosure relates to the field of computer technologies, and in particular, to a method and an apparatus for processing a zero page in physical memory, a device, and a storage medium.

### BACKGROUND

With development of computer technologies, virtual machines are widely used. A virtual machine is a complete software-simulated computer system that has complete hardware system functions and that runs in a completely isolated environment. Any work that can be completed on a physical computer can be implemented on the virtual machine.

During startup, the virtual machine requests an amount of physical memory from a host. Physical memory pages are then zeroed, that is, all page data is set to zeros. In this way, a large number of zero pages are generated in the physical memory. A zero page is a page storing data that is all zeros.

High physical memory usage by the zero pages causes host operation lag.

### SUMMARY

The present disclosure provides a method and an apparatus for processing a zero page in physical memory, a device, and a storage medium, to improve efficiency in processing a zero page in physical memory.

According to a first aspect, a method for processing a zero page in physical memory is provided. The method includes: first identifying an operation for generating a zero page; then determining the zero page corresponding to the operation, and marking the zero page with a zero-page flag; then detecting, in physical memory pages, the page marked with the zero-page flag; and finally reclaiming the page marked with the zero-page flag. The zero page is a physical memory page containing data that is all zeros. The reclaiming is setting the page to an unallocated state.

In the foregoing operation, processing of detecting the zero-page flag may be triggered periodically, or may be triggered by a manual operation, or may be triggered by specified processing. The processing of detecting the zero-page flag may be performed on all physical memory pages, or may be performed on some physical memory pages.

In this way, the zero page may be reclaimed to reduce physical memory usage, thereby preventing host operation lag. In addition, compared with zero page removal in a page deduplication manner, a processing manner of directly reclaiming the zero page can effectively simplify specific processing. For example, a quantity of times of refreshing a translation lookaside buffer (translation lookaside buffer, TLB) may be reduced, and page table write protection does not need to be performed. Therefore, efficiency of zero page removal can be effectively improved.

In a possible implementation, a reference count of the page marked with the zero-page flag is decreased by a first value. The reference count indicates a quantity of entities that use the page, and the entity includes a process and/or a thread. If the decreased reference count is equal to a second value, the page marked with the zero-page flag is reclaimed.

The first value may be any preset value such as 1 or 2. Correspondingly, when a virtual machine requests to use a page, the reference count is also increased by the first value. The second value may be 0.

In this way, page reclaiming is triggered by decreasing the reference count by a fixed value. If another process or thread is also using the page at this time, after being decreased, the reference count is not decreased to zero, the page is not reclaimed, and the use of the page by the another process or thread is not affected. If the another process or thread does not use the page at this time, after being decreased, the reference count is decreased to zero, and the page is reclaimed.

In a possible implementation, the operation for generating the zero page includes: executing a first hardware instruction. The first hardware instruction is a hardware instruction used to zero a physical memory page.

The first hardware instruction may be a newly defined hardware instruction. When executing the hardware instruction, a processor may perform an operation for zeroing a target page to obtain a zero page, and mark the zero page.

In this way, the processor can complete complex operation steps related to zero page generation and reclaiming by executing the first hardware instruction, thereby simplifying operations of zero page generation and reclaiming.

In a possible implementation, before the operation for generating the zero page is identified, a current first code segment to be compiled is obtained in a process of compiling guest code. If the first code segment is identified as a code segment used to zero a physical memory page, the first code segment is compiled into the first hardware instruction.

The guest code is any program code used to run in a guest. The compilation may be performed at any time before the code is executed. The compiled code may not be executed temporarily, and is executed after an execution instruction is received. The compilation may be executed by any device. Code compilation and code running may be performed on different devices or on a same device. In addition, the compilation may alternatively be performed during code execution.

In this way, the first code segment used to zero a physical page is compiled into the first hardware instruction, and the processor can complete complex operation steps related to zero page generation and reclaiming by executing the first hardware instruction, thereby simplifying operations of zero page generation and reclaiming.

In a possible implementation, the first code segment is a first function, a function name of the first function is a specified function name, and a function corresponding to the specified function name is a function used to zero a physical memory page.

The specified function name may be memset (a function name) or RtlZeroMemory (a function name).

In this way, the code segment used to zero a physical memory page may be identified by matching a function name. A processing manner is relatively simple, and a few processor resources are consumed.

In a possible implementation, the operation for generating the zero page includes: invoking a second code segment. The second code segment is a code segment used to zero a physical memory page.

The second code segment is a code segment used to zero a memory page, and the code segment may be a function or a non-function.

In this way, in a phase of invoking a code segment, the operation for generating the zero page is identified, so that generation of the zero page can be determined in a more timely manner.

In a possible implementation, the second code segment is a second function, a function name of the second function is a specified function name, and a function corresponding to the specified function name is a function used to zero a physical memory page; or the second code segment is a second function, a function name of the second function is a specified function name, and a current input parameter of the second function meets a page zeroing determining condition corresponding to the specified function name.

A guest operating system (guest operating system, GuestOS) may prestore a correspondence table between a function name and a page zeroing determining condition. Functions related to the correspondence table are functions that can zero a memory page, for example, memset and RtlZeroMemory. When the input parameters of these functions meet a condition, an operation for zeroing a memory page can be implemented. The condition is a page zeroing determining condition in the table.

In this way, a processing manner of directly matching a function name consumes a few processor resources. The operation for generating the zero page is identified by combining function name matching and input parameter determining, and identification accuracy is high.

In a possible implementation, the operation for generating the zero page includes: translating a second hardware instruction provided by a guest operating system to obtain a third hardware instruction. The third hardware instruction is a hardware instruction used to zero a physical memory page.

In this way, in a phase of translating a hardware instruction, the operation for generating the zero page is identified, so that generation of the zero page can be determined in a more timely manner.

In a possible implementation, the third hardware instruction is a specified hardware instruction, and a current input parameter of the third hardware instruction meets a page zeroing determining condition corresponding to the specified hardware instruction; or the third hardware instruction is a specified hardware instruction, and the specified hardware instruction is a hardware instruction used to zero a physical memory page.

In this way, a processing manner of directly matching a hardware instruction consumes a few processor resources. The operation for generating the zero page is identified by combining hardware instruction matching and input parameter determining, and identification accuracy is high.

In a possible implementation, the operation for generating the zero page includes: obtaining a fourth hardware instruction to be executed. The fourth hardware instruction is a hardware instruction used to zero a physical memory page.

In a process of executing the guest code, the processor determines that the fourth hardware instruction to be executed is a hardware instruction used to zero a memory page, and debugs (debug) the fourth hardware instruction, so that a hypervisor (hypervisor) obtains the fourth hardware instruction. The hypervisor determines a corresponding zero page.

In this way, the processor identifies, in a hardware manner, the operation for generating the zero page, and has higher processing efficiency compared with a software identification manner.

In a possible implementation, the fourth hardware instruction is a specified hardware instruction, and a current input parameter of the fourth hardware instruction meets a page zeroing determining condition corresponding to the specified hardware instruction; or the fourth hardware instruction is a specified hardware instruction, and the specified hardware instruction is a hardware instruction used to zero a physical memory page.

In this way, a processing manner of directly matching a hardware instruction consumes a few processor resources. The operation for generating the zero page is identified by combining hardware instruction matching and input parameter determining, and identification accuracy is high.

In a possible implementation, the zero-page flag is marked in a nested page table of the zero page.

In this way, there is no need to establish other information tables or data structures to record the zero-page flag.

In a possible implementation, before the page marked with the zero-page flag is detected in the physical memory pages and after the zero page is marked with the zero-page flag, the zero-page flag for marking the zero page is canceled when a write operation on the zero page is detected.

In this way, whether a page is a zero page can be directly determined using the zero-page flag, so that efficiency of zero page detection can be improved.

In a possible implementation, after the zero page corresponding to the operation is determined, a dirty bit corresponding to the zero page in the nested page table is set to an unset state. The zero-page flag for marking the zero page is canceled when it is detected that the dirty bit is set to the set state. The dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state.

When the target page is marked with the zero-page flag, a dirty bit of a page table entry corresponding to the target page may be set to 0 in the nested page table. After the zero page is marked with the zero-page flag, when a write operation is performed on the page, the dirty bit is automatically set to 1, and the zero-page flag for marking the zero page is canceled simultaneously.

In this way, whether a write operation exists on a page is determined through dirty bit identification. Content that needs to be identified is relatively simple, and fewer processing resources are consumed.

In a possible implementation, after the zero page corresponding to the operation is determined, a dirty bit corresponding to the zero page in the nested page table is set to an unset state. The page marked with the zero-page flag is reclaimed on a basis that the dirty bit, in the nested page table, corresponding to the page marked with the zero-page flag has not changed to the set state. The dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state.

When the target page is marked with the zero-page flag, a dirty bit of a page table entry corresponding to the target page may be set to 0 in the nested page table. Subsequently, there is no need to determine whether to cancel the zero-page flag, and there is also no need to perform a corresponding cancellation operation. When zero page identification is performed, for any page, if the page is marked with a zero-page flag and a value of a dirty bit corresponding to the page is 0, it may be determined that the page is a zero page. If the page is not marked with a zero-page flag or the value of the dirty bit corresponding to the page is 1, it may be determined that the page is not a zero page.

In this way, after a write operation exists on a page, a zero-page flag does not need to be canceled, thereby simplifying operations.

According to a second aspect, an apparatus for processing a zero page in physical memory is provided. The apparatus includes at least one module. The at least one module is configured to implement the method provided in any one of the first aspect or the possible implementations thereof.

According to a third aspect, a computer device is provided. The computer device includes a memory and a processor. The memory is configured to store computer instructions. The processor executes the computer instructions stored in the memory, to cause the computer device to perform the method provided in any one of the first aspect or the possible implementations thereof.

According to a fourth aspect, a mobile terminal is provided. The mobile terminal includes a memory and a processor. The memory is configured to store computer instructions. The processor executes the computer instructions stored in the memory, to cause the mobile terminal to perform the method provided in any one of the first aspect or the possible implementations thereof.

According to a fifth aspect, a computer-readable storage medium is provided. The computer-readable storage medium stores computer program code. When the computer program code is executed by a computer device, the computer device performs the method provided in any one of the first aspect or the possible implementations thereof.

According to a sixth aspect, a computer program product is provided. The computer program product includes computer program code. When the computer program code is executed by a computer device, the computer device performs the method provided in any one of the first aspect or the possible implementations thereof.

### BRIEF DESCRIPTION OF DRAWINGS

FIG. 1 is a diagram of a page table entry of an EPT according to an embodiment of the present disclosure;
FIG. 2 is a diagram of a page table entry of stage-2 according to an embodiment of the present disclosure;
FIG. 3 is a diagram of a structure of a terminal device according to an embodiment of the present disclosure;
FIG. 4 is a schematic flowchart of a method for processing a zero page in physical memory according to an embodiment of the present disclosure;
FIG. 5 is a diagram of a processing procedure of determining a zero page according to an embodiment of the present disclosure;
FIG. 6 is a diagram of a processing procedure of determining a zero page according to an embodiment of the present disclosure;
FIG. 7 is a diagram of a processing procedure of determining a zero page according to an embodiment of the present disclosure;
FIG. 8 is a diagram of a processing procedure of determining a zero page according to an embodiment of the present disclosure;
FIG. 9 is a diagram of a page table entry configured with a zero-page flag bit according to an embodiment of the present disclosure; and
FIG. 10 is a diagram of a structure of an apparatus for processing a zero page in physical memory according to an embodiment of the present disclosure.

### DESCRIPTION OF EMBODIMENTS

Embodiments of the present disclosure provide a method for processing a zero page in physical memory, to reduce memory resource usage by zero pages. The following first describes some terms in a processing process of the method.

### Physical memory

The physical memory is also referred to as a main memory or a random access memory, and is a hardware device used to store data and instructions in a computer system.

### Page

The page is a basic unit of storage space in the physical memory.

### Zero page

The zero page is a physical memory page containing data that is all zeros. Generally, zero pages are mainly generated during running of a virtual machine.

The zeroing a physical memory page is changing all data in a page in the physical memory to zeros to turn the page into a zero page.

### Page zeroing instruction

The page zeroing instruction is an instruction that can be directly executed by a central processing unit (central processing unit, CPU). The instruction may zero a memory page at a specified physical address based on a given page size.

### Virtual machine

The virtual machine is a complete software-simulated computer system that has complete hardware system functions. The virtual machine may also be referred to as a guest, and a physical machine that runs the virtual machine may be referred to as a host.

### Hypervisor (hypervisor)

The hypervisor can be considered as a program that allocates hardware resources such as memory to a virtual machine running on the host and manages running of the virtual machine. The hypervisor may be a virtual machine monitor (virtual machine monitor, VMM), a kernel-based virtual machine (kernel-based virtual machine, KVM), or the like.
Guest operating system (guest operating system, GuestOS)
Operating system installed and run on the guest.
Host operating system (host operating system, HostOS)
Operating system installed and run on the host.

### Page table (page table, PT)

The page table is used to record mapping information between a physical address and a virtual address of a page. The page table may include a plurality of page table entries, and each of the page table entries corresponds to one page in the memory.

The page table recorded by the GuestOS can be used to record mapping information between a guest virtual address (guest virtual address, GVA) and a guest physical address (guest physical address, GPA). The GPA is a physical address in a guest. Although termed a physical address, the GPA is not an actual physical address. The page table recorded by the hypervisor can be used to record mapping information between a GPA and a host physical address (host physical address, HPA). The page table is generally called a nested page table (nested page table, NPT). When there are a plurality of virtual machines on the host, each virtual machine corresponds to one hypervisor. The hypervisor records nested page tables corresponding to the virtual machines managed by the hypervisor.

### Nested page table (nested page table, NPT)

A page table entry of the nested page table includes a plurality of bits. Each of the bits may have a field with a specified length (a quantity of bits). The plurality of bits may include a bit for recording a physical address, a bit for recording some related parameters (for example, a dirty bit and a memory type bit), and the like. The page table entry may further include a reserved field (reserved). The reserved field is a field that is not defined in a protocol temporarily, and some or all fields in the reserved field may be defined as new bits according to an actual requirement to extend the function of the nested page table.

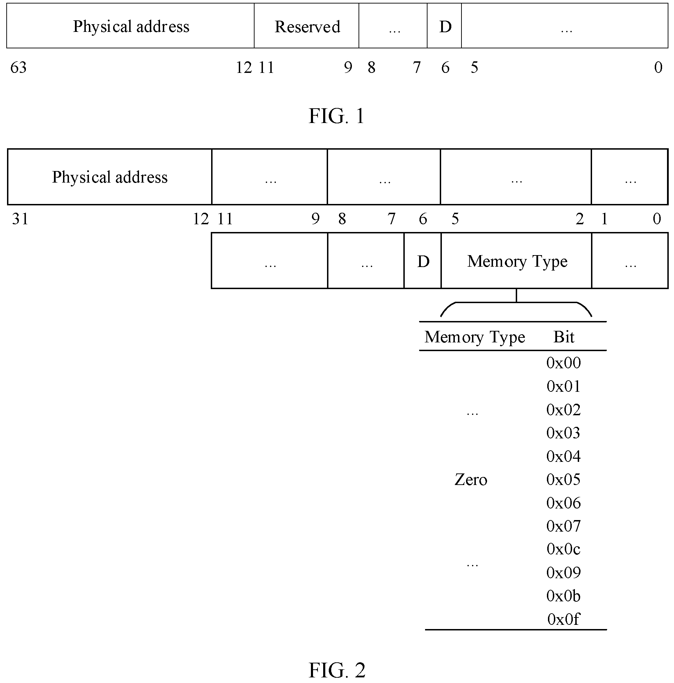

In embodiments of the present disclosure, related operations are performed on a nested page table in the hypervisor. Common nested page tables include an extended page table (extended page table, EPT), a stage-2 (stage-2) page table, and the like. A page table entry of the EPT is shown in FIG. 1. Bits 9 to 11 are a reserved field, and parameters of the fields in the figure are not described one by one. In the figure, Reserved represents a reserved field, and D represents a dirty bit. A page table entry of stage-2 is shown in FIG. 2. In bits 2 to 5 occupied by a memory type (memory type) field, a part of the field is a reserved field, and parameters of the fields in the figure are not described one by one.

### Dirty bit

The dirty bit is a parameter bit indicating whether a write operation is performed on a corresponding page, that is, indicating whether content on the page changes. A method for using the dirty bit is as follows: If the dirty bit that has been set to an unset state changes from the unset state to a set state, it indicates that a write operation has been performed on the corresponding page after the dirty bit is set to the unset state. That is, the unset state indicates that the content on the page has not changed, and the set state indicates that the content on the page changes. Generally, the unset state may be represented by a value of 0. The setting the dirty bit to the unset state may also be referred to as setting the dirty bit to 0. The set state may be represented by a value of 1. The setting the dirty bit to the set state may also be referred to as setting the dirty bit to 1. For example, based on service logic, a dirty bit corresponding to a page is set to 0 in a case. In a subsequent processing process, if content on the page changes, the dirty bit is set to 1. In this way, whether the content on the page changes after the dirty bit is set to 0 may be determined by detecting a value of the dirty bit.

### Reclaiming

Reclaiming is to change the physical memory page from an allocated state to an unallocated state.

### Reference count

The reference count indicates a quantity of times that a page in the physical memory is referenced. In other words, the reference count indicates a quantity of entities (which may include a process and/or a thread) that use the page. Because a quantity of times that a different entity uses the page is generally 1, the quantity of times and the quantity may be considered to be equal. Various processes or threads use respective mechanisms to increase or decrease the reference count by 1 according to respective service requirements. For example, a page may be shared by a plurality of virtual machines. When a virtual machine uses a page, a page table entry of the page may be established in a nested page table of the virtual machine to record corresponding address mapping information, and correspondingly, a reference count of the page is also increased by 1. When the plurality of virtual machines share a same page, a page table entry of the page is established in nested page tables of the virtual machines, and correspondingly, a reference count of the page is equal to a quantity of virtual machines sharing the page.

### Debug (debug)

Debug is a function in hardware-assisted virtualization technology. A general mechanism of the hardware-assisted virtualization technology is as follows: Because a virtual machine does not have the highest permission in a processor, some hardware instructions to be executed by the virtual machine may be rejected by the processor. In this case, the hardware-assisted virtualization technology may enable the hypervisor to learn the hardware instructions that are rejected and rejection reasons, and the hypervisor can ensure normal execution of these hardware instructions in some manners. A working principle of the debug function is as follows: The processor may add a mark (which may be referred to as a breakpoint) to any hardware instruction to be executed, and the hardware instruction to which the mark is added is rejected by the processor. Further, based on a general mechanism of the hardware-assisted virtualization technology, the hypervisor learns that the hardware instruction is rejected, and learns a rejection reason.

With the debug function, some related processing, for example, instruction analysis, may be performed on some hardware instructions using the hypervisor according to service requirements.

The method for processing a zero page in physical memory provided in embodiments of the present disclosure may be implemented by a computer device. The computer device may be any device on which a virtual machine is disposed. The computer device may be a terminal device or a server. The terminal device may be a mobile phone, an iPad, a desktop computer, a notebook computer, or the like. The server may be a server of an application, a server of a cloud service, a server configured to complete some compute tasks, or the like. A terminal device is used as an example. A Windows (Windows) operating system may run on the terminal device. In the Windows operating system, a virtual machine may run, and another Windows operating system or another operating system may run on the virtual machine.

A virtual machine is widely applied to a terminal device. Therefore, in embodiments of the present disclosure, an example in which a computer device is a terminal device is used for detailed description of the solution. Other cases are similar to this, and details are not described again.

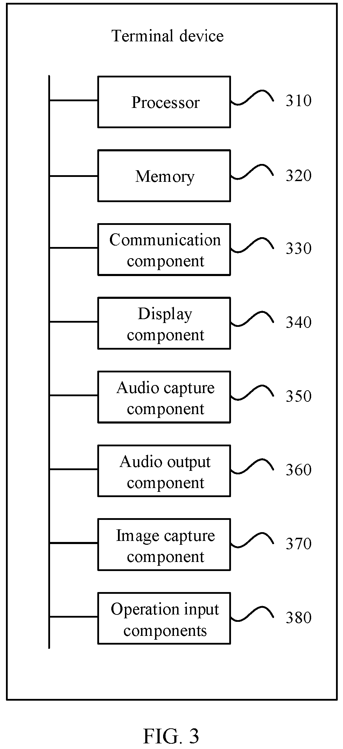

As shown in FIG. 3, the terminal device may include a processor 310, a memory 320, a communication component 330, a display component 340, and the like.

The processor 310 may be a central processing unit (central processing unit, CPU). The processor may be configured to execute various operation instructions. For example, the processor may be configured to mark and reclaim a zero page in physical memory.

The memory 320 may be various volatile memories or non-volatile memories, for example, a solid-state disk (solid-state disk, SSD) or a dynamic random access memory (dynamic random access memory, DRAM). The memory may be configured to store pre-stored data, intermediate data, and result data related to a processing process, for example, a nested page table.

The communication component 330 may be a wired network connector, a wireless fidelity (wireless fidelity, Wi-Fi) module, a Bluetooth module, a honeycomb network communication module, or the like. The communication component may be configured to perform data transmission with another device. For example, the communication component may be configured to receive an operation instruction of the processor, and may be further configured to send an address of a memory page to a virtual machine.

The display component 340 may be an independent screen, or a screen, a projector, or the like that is integrated with a terminal body. The screen may be a touchscreen, or may be a non-touchscreen (which may be written remotely). The display component 340 is configured to display a system interface, an application interface, or the like. For example, the display component 340 may display a current memory usage of the terminal device.

In addition to the processor 310, the memory 320, the communication component 330, and the display component 340, the terminal device may further include an audio capture component 350, an audio output component 360, an image capture component 370, various operation input components 380, and the like.

The audio capture component 350 may be a microphone, and is configured to capture a voice of a user. The audio output component 360 may be a speaker, a headset, or the like, and is configured to play audio. The image capture component 370 may be a camera, and is configured to capture an image. The operation input component 380 may include a mouse, a keyboard, a touchpad, a graphics tablet, and the like.

When a virtual machine is started, a host allocates physical memory to the virtual machine according to requirements of the virtual machine, and zeros unused physical memory of the virtual machine. However, when the virtual machine is just started, a very small amount of physical memory is actually used, which is far less than the allocated physical memory. In this case, a large quantity of zero pages exist in the allocated but unused physical memory. These zero pages cannot be used by the host or other virtual machines on the host. A large number of zero pages in the physical memory cause a waste of physical memory resources.

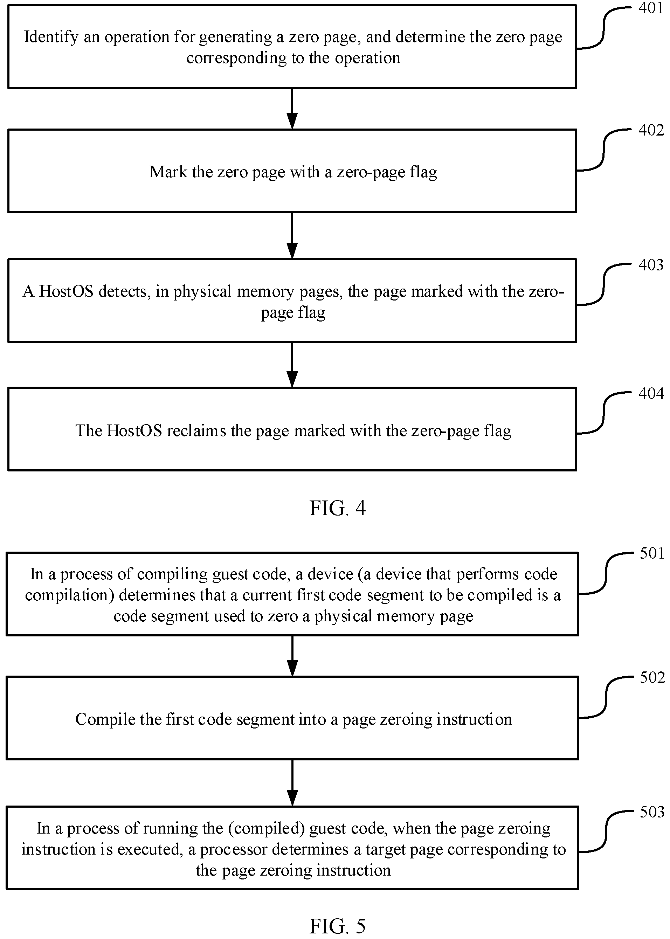

In the method for processing a zero page in physical memory provided in embodiments of the present disclosure, generated zero pages are reclaimed. FIG. 4 shows a processing procedure of the method, which may include the following steps.

401: Identify an operation for generating a zero page, and determine the zero page corresponding to the operation.

Based on different identification methods, there may be a plurality of specific processing manners in this step. The following briefly describes several processing manners.

Manner 1: In a process of compiling guest code, a compiler compiles a first code segment used to zero a physical memory page into a first hardware instruction (the first hardware instruction is the page zeroing instruction described above). In a process of executing the compiled guest code, when the page zeroing instruction is executed, a processor determines a target page (that is, a zero page) corresponding to the page zeroing instruction. A specific process is described in detail using the processing procedure shown in FIG. 5.

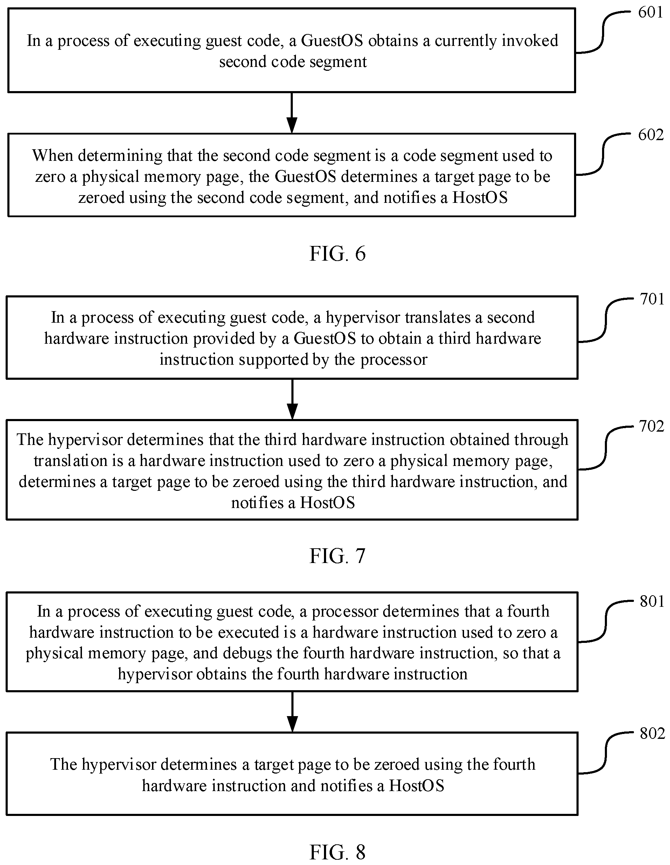

Manner 2: In a process of executing guest code, a GuestOS obtains a currently invoked second code segment. When determining that the second code segment is a code segment used to zero a physical memory page, the GuestOS determines a target page (that is, a zero page) to be zeroed using the second code segment, and notifies a HostOS. A specific process is described in detail using the processing procedure shown in FIG. 6.

Manner 3: In a process of executing guest code, a hypervisor translates the second hardware instruction provided by a GuestOS to obtain a third hardware instruction supported by a processor. The hypervisor determines that the third hardware instruction obtained through translation is a hardware instruction used to zero a physical memory page, determines a target page (that is, a zero page) to be zeroed using the third hardware instruction, and notifies a HostOS. A specific process is described in detail using the processing procedure shown in FIG. 7.

Manner 4: In a process of executing guest code, a processor determines that a fourth hardware instruction to be executed is a hardware instruction used to zero a physical memory page, and debugs the fourth hardware instruction, so that the hypervisor obtains the fourth hardware instruction. The hypervisor determines a target page (that is, a zero page) to be zeroed using the fourth hardware instruction and notifies the HostOS. A specific process is described in detail using the processing procedure shown in FIG. 8.

402: Mark the zero page with a zero-page flag.

In Marking Manner 1, the zero-page flag is marked in a nested page table.

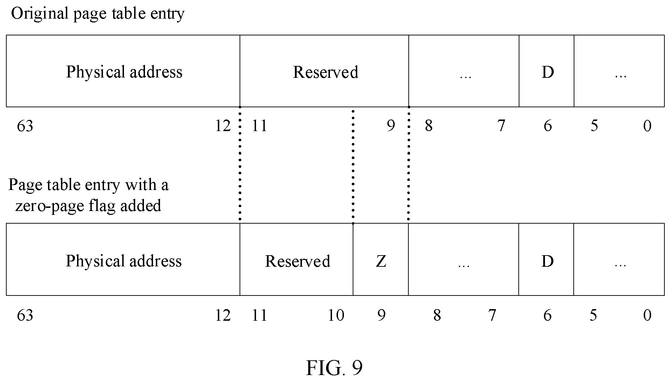

One zero-page flag bit may be preconfigured in the nested page table, and the zero-page flag bit may be configured in a reserved field. For example, as shown in FIG. 9, bits 9 to 11 in a page table entry are the reserved field, and the bit 9 may be configured as the zero-page flag bit, which is represented by a letter Z in the figure. For another example, as shown in FIG. 2, bit 0x05 in memory type is configured as the zero-page flag bit, and is represented by "Zero" in the figure.

A value of the zero-page flag may be manually set. For example, if an initial value of a zero-page flag bit of a page table entry corresponding to any page is 0, it may be considered that the page is not marked with a zero-page flag. When the page is zeroed, the value of the zero-page flag bit is set to 1, that is, the page is marked with the zero-page flag.

When the value in the zero-page flag bit is 0, it indicates that the corresponding page is not a zero page. When the value in the zero-page flag bit is 1, it indicates that the corresponding page is a zero page.

Marking Manner 2, the zero-page flag is marked outside a nested page table.

An array may be established. Each value in the array corresponds to one page. Each value indicates whether a corresponding page is a zero page, and the zero-page flag corresponds to a specified value (for example, 1). That is, when a value in the array is the specified value, a page corresponding to the value is a zero page. For example, the first value in the array corresponds to page No. 0, the second value corresponds to page No. 1, and so on. In an initial state of the array, all values are set to 0. When a page is zeroed, a value corresponding to the page is set to 1, that is, a zero-page flag is marked for the page.

Alternatively, an array may be established, and the array is used to record a page identifier of a zero page. An initial state of the array is empty. When a page is zeroed, a page identifier of the page is added to the array, that is, the page is marked with a zero-page flag.

In the foregoing manner of marking a zero-page flag in an array, one array may be established for each virtual machine, and the array corresponding to each virtual machine is used to record a zero-page flag related to the virtual machine.

In the foregoing processing of marking a zero-page flag using an array, the array is also established for a corresponding virtual machine, and respective corresponding arrays may be established for different virtual machines.

The foregoing steps 401 and 402 provide processing of adding a zero-page flag. In addition, optionally, for a target page to which a zero-page flag is added, when a write operation on the target page is detected, the zero-page flag marked for the target page may be canceled. Specifically, the zero-page flag may be directly canceled when the write operation is performed, or the zero-page flag may be canceled when it is detected in another manner that content on the target page changes, for example, in a dirty bit detection manner. Details are described in the following content. For a processing manner of canceling the zero-page flag, for example, for the foregoing Marking Manner 1, the zero-page flag bit may be set to 0.

403: The HostOS detects, in physical memory pages, the page marked with the zero-page flag.

The processing of this step may be performed periodically. For the foregoing Marking Manner 1, the HostOS may traverse nested page tables corresponding to virtual machines currently running on the host, and traverse, in each nested page table, zero-page flag bits in page table entries, to determine zero pages in the pages. For the foregoing Marking Manner 2, the HostOS may traverse the foregoing array to determine zero pages in the pages.

404: The HostOS reclaims the page marked with the zero-page flag.

After detecting a zero-page flag of a page, the HostOS decreases a reference count of the page by 1 (or another preset value may be used), and determines whether a reference count obtained after the decrease by 1 is 0 (or another preset value may be used). If the value is 0, reclaiming of the page is automatically triggered. If the value is not 0, the page is not reclaimed temporarily. In addition to the mechanism in this method, there may be another mechanism for performing an operation of increasing or decreasing the reference count of the page. Therefore, the reference count after the decrease by 1 is not necessarily equal to 0, and the page may be reclaimed when the reference count is 0 subsequently. For example, when a plurality of virtual machines share a page, a reference count of the page is equal to a quantity of virtual machines that share the page. After a zero-page flag of the page is detected in a nested page table or an array of a virtual machine, the reference count may be decreased by 1, and a reference count obtained after the decrease by 1 is not equal to 0. When the zero-page flag of the page is detected again in a nested page table or an array of another virtual machine, the reference count of the page is decreased by 1 again, and the reclaiming of the page is triggered when the reference count is decreased to 0. When reclaiming a page, the HostOS may release, from the nested page table, a page table entry corresponding to the page.

Execution of step 401 triggers step 402. However, steps 401 and 402 and steps 403 and 404 may be performed asynchronously, that is, steps 401 and 402 do not trigger step 403, and execution of step 403 may be triggered based on a fixed period. The execution of step 403 triggers step 404.

In the foregoing processing procedure, the dirty bit in the page table entry may be used together with the zero-page flag to identify the zero page. Correspondingly, there are a plurality of possible methods. The following describes two of the methods.

Method 1: The write operation of the page is determined using a dirty bit to cancel a zero-page flag, and only the zero-page flag needs to be identified when the zero page is identified.

When the target page is marked with the zero-page flag, a dirty bit of a page table entry corresponding to the target page may be set to 0 in the nested page table. Subsequently, the dirty bit of the page table entry may be periodically detected. When it is detected that a value of the dirty bit changes to 1, it is determined that the content on the target page changes, that is, the target page is no longer a zero page. In this case, the zero-page flag of the target page is canceled. When zero page identification is performed, for any page, if a zero-page flag is correspondingly marked, it may be determined that the page is a zero page. If no zero-page flag is correspondingly recorded, it may be determined that the page is not a zero page.

Method 2: Cancellation logic is not set for a zero-page flag. The dirty bit and the zero-page flag may be combined for determining to identify the zero page.

When the target page is marked with the zero-page flag, a dirty bit of a page table entry corresponding to the target page may be set to 0 in the nested page table. Subsequently, there is no need to determine whether to cancel the zero-page flag, and there is also no need to perform a corresponding cancellation operation. When zero page identification is performed, for any page, if the page is marked with a zero-page flag and a value of a dirty bit corresponding to the page is 0, it may be determined that the page is a zero page. If the page is not marked with a zero-page flag or the value of the dirty bit corresponding to the page is 1, it may be determined that the page is not a zero page.

In embodiments of the present disclosure, when an operation for generating a zero page is identified, the zero page corresponding to the operation is determined, and the zero page is marked. In addition, a page with a zero-page flag is detected in physical memory pages and is reclaimed. Therefore, corresponding physical memory may be released to reduce physical memory usage, thereby preventing host operation lag.

In addition, compared with zero page removal in a page deduplication manner, a processing manner of directly reclaiming the zero page can effectively simplify specific processing. For example, a quantity of times of refreshing a translation lookaside buffer (Translation Lookaside Buffer, TLB) may be reduced, and page table write protection does not need to be performed. Therefore, efficiency of zero page removal can be effectively improved.

In embodiments of the present disclosure, a detailed processing procedure of Manner 1 of step 401 is shown in FIG. 5, and may include the following steps.

501: In a process of compiling guest code, a device (a device that performs code compilation) determines that a current first code segment to be compiled is a code segment used to zero a physical memory page.

The guest code is any program code used to run in a guest.

The compilation may be performed at any time before the code is executed. The compiled code may not be executed temporarily, and is executed after an execution instruction is received. The compilation may be executed by any device. Code compilation and code running may be performed on different devices. Alternatively, the compilation may alternatively be performed during code execution. In a compilation process, code is traversed. Therefore, in this process, a code segment that is included in the guest code and that is used to zero a physical memory page may be determined. There are many corresponding processing manners. The following provides two possible processing manners as examples.

Manner 1: Match a function name.

The device determines that a function name corresponding to a function in the guest code is the same as a specified function name, where the function corresponding to the specified function name is a function used to zero a physical memory page. The specified function name may be memset (a function name) or RtlZeroMemory (a function name).

The device may pre-store a function list, and may record, in the function list, a function name (that is, the specified function name) of a function used to zero a physical memory page. In the process of compiling the guest code, when compiling any function, the device searches the function list for a function name of the function. If the function name is found, it is determined that the function is a function used to zero a physical memory page, and the function may be compiled into a page zeroing instruction.

Manner 2: Perform code matching.

The device determines that the first code segment is the same as a specified code segment, where the specified code segment is a code segment used to zero a physical memory page.

The device may pre-store one or more code segments (that is, specified code segments) used to zero a physical memory page, and the code segments may be functions or non-functions.

In the process of compiling the guest code, comparison may start from the first statement of the guest code. If the statement is the same as the first statement of the specified code segment, a next statement of the guest code is matched against a next statement of the specified code segment. If all the statements of the specified code segment sequentially match those of the guest code, the code segment in the guest code is a code segment used to zero a physical memory page. If any statement in the guest code is different from the corresponding statement in the specified code segment during this process, matching stops. The same comparison is then performed on next code of the guest code. In this way, a code segment used to zero a physical memory page in the guest code is obtained.

502: Compile the first code segment into a page zeroing instruction.

The compiling the guest code is a process of converting the guest code into a hardware instruction. The page zeroing instruction is a hardware instruction, and a zeroing operation may be directly performed on a page. Provided that a function used to zero a physical memory page is detected in the compilation process, the function is compiled into a page zeroing instruction.

503: In a process of running the (compiled) guest code, when the page zeroing instruction is executed, the processor determines a target page corresponding to the page zeroing instruction.

In the process of running the (compiled) guest code, the processor executes a hardware instruction obtained by compiling the guest code. When the executed hardware instruction is a page zeroing instruction, the processor determines a target page corresponding to the page zeroing instruction, that is, a zero page. The processor may mark the target page. The marking may be performed in the manner described in step 402.

In embodiments of the present disclosure, a detailed processing procedure of Manner 2 of step 401 is shown in FIG. 6, and may include the following steps.

601: In the process of executing the guest code, the GuestOS obtains the currently invoked second code segment.

The second code segment may be a function.

In the process of executing the guest code by the GuestOS, each time a function call statement is executed, a currently called function may be determined.

602: When determining that the second code segment is a code segment used to zero a physical memory page, the GuestOS determines the target page to be zeroed using the second code segment, and notifies the HostOS.

The GuestOS may prestore a correspondence table between a function name and a page zeroing determining condition. Functions related to the correspondence table are functions that can zero a physical memory page, for example, memset and RtlZeroMemory, and may be pre-specified by a skilled person based on experience and added to the correspondence table. When the input parameters of these functions meet a condition, an operation for zeroing a physical memory page can be implemented. The condition is a page zeroing determining condition in the table.

After the GuestOS determines the name of the currently called function, the GuestOS may determine whether the correspondence table includes the function name. If the correspondence table includes the function name, a page zeroing determining condition corresponding to the function name may be further determined in the correspondence table. In addition, a current input parameter of the function is obtained, and it is determined whether the input parameter meets the page zeroing determining condition. If the input parameter meets the page zeroing determining condition, it is determined that the function is currently used to zero a physical memory page. In this case, a target page zeroed by the function may be determined, and a physical address (which may be a page-start physical address or a physical address range) of the target page in the virtual machine is notified to the HostOS. A communication method between the GuestOS and the HostOS includes, but is not limited to, hypercall (hypercall), virtual device communication, network communication, shared memory communication, and the like. The HostOS may perform subsequent marking on the target page.

In the foregoing process, if the correspondence table does not include the name of the currently called function, or the current input parameter of the function does not meet the page zeroing determining condition, it is determined that the function is not used to zero a physical memory page.

The following uses a memset function as an example.

The memset function is a function used to write values to a character string to enable all digits of the character string to have the same value. The definition statement of this function is as follows:
Void *memset(void *s, int c, unsigned long n)

Description of the input parameter:
void *s: Indicating the starting address of the character string.
int c: Indicating that the value of each digit in the character string is set to a current value of a variable c.
unsigned long n: Indicating the length of the character string.

A procedure of determining, based on the value of the input parameter, whether to generate a zero page is as follows:
Step 1: Determine whether c is 0. If c is not 0, no zero page is generated, and the procedure is ended.

Step 2: Check whether n is greater than or equal to a page size. If n is less than the page size, it indicates that 0 of the character string cannot fill up the entire page. Therefore, it is considered that no zero page is generated, and the procedure is ended.

Step 3: Determine whether an address (denoted as an address A) corresponding to *s is the same as a start address of any page. If a start address of a page matches an address A, a ratio of n to the page size is calculated. If the ratio is greater than or equal to 1, it is determined that a zero page is generated. Further, a target page to be zeroed may be determined based on the address A and a value obtained by rounding down the ratio (which may indicate a quantity of zero pages). If the ratio is less than 1, no zero page is generated, and the process is ended. If a start address of no page matches the address A, a start address (denoted as an address B) of the first page to the right of the address is determined, an increment m of the address B relative to the address A is determined, and a ratio of n-m to the page size is calculated. If the ratio is greater than or equal to 1, it is determined that a zero page is generated. Further, a target page to be zeroed may be determined based on a modulus of the address B with respect to the ratio (which may represent a quantity of zero pages). If the ratio is less than 1, no zero page is generated, and the process is ended.

The following uses a more specific example for description (using a page size of 4096 bytes as an example):

### Example 1: "memset(0xf80000, 0, 4096)"

c is 0. n is 4096, and 4096 is equal to a page size.* An address corresponding to s is 0xf80000, and the address can be the same as a start address of a page. A ratio of n to the page size is 4096/4096, and the result of this equation is 1. Therefore, a zero page may be generated, and the generated zero page is a page whose start address is 0xf80000.

### Example 2: "memset(0xf80000, 1, 4096)"

If c is 1 and 1 is a non-zero number, no zero page is generated.

### Example 3: "memset(0xf80000, 0, 2048)"

c is 0. n is 2048, and 2048 is less than a page size. Therefore, no zero page is generated.

### Example 4: "memset(0xf80f00, 0, 6400)"

c is 0. A value of n is 6400, and 6400 is greater than a page size.* An address corresponding to s is 0xf80f00. A start address of no page is the same as this address. The start address of the first page to the right of the address is 0xf81000. An increment of 0xf81000 relative to 0xf80f00 is 256. A ratio of n-256 to the page size is (6400-256)/4096. The result of rounding down the ratio is 1. Therefore, a zero page may be generated, and the generated zero page is a page whose start address is 0xf81000.

### Example 5: "memset(0xf80f00, 0, 4100)"

c is 0. A value of n is 4100, and 4100 is greater than a page size.* An address corresponding to s is 0xf80f00. A start address of no page is the same as this address. The start address of the first page to the right of the address is 0xf81000. An increment of 0xfS1000 relative to 0xf80f00 is 256. A ratio of n-256 to the page size is (4100-256)/4096. The result of rounding down the ratio is 0. Therefore, no zero page is generated.

In addition, because some functions are generally used only to zero a physical memory page when being used, a manner of matching only a function name may also be used to determine whether the currently called function is used to zero a physical memory page. A corresponding processing manner is similar to Manner 1 of step 401, and details are not described herein again.

In embodiments of the present disclosure, a detailed procedure of Manner 3 of step 401 is shown in FIG. 7, and may include the following steps.

701: In the process of executing the guest code, the hypervisor translates the second hardware instruction provided by the GuestOS to obtain the third hardware instruction supported by the processor.

When the guest code is executed, the GuestOS first compiles the guest code into the second hardware instruction supported by the hypervisor. The hypervisor translates the second hardware instruction to obtain the third hardware instruction supported by the processor.

702: The hypervisor determines that the third hardware instruction obtained through translation is a hardware instruction used to zero a physical memory page, determines a target page to be zeroed using the third hardware instruction, and notifies a HostOS.

Manner 1: Instruction matching: It is determined that the third hardware instruction is the same as a specified hardware instruction, where the specified hardware instruction is a hardware instruction used to zero a physical memory page.

The hypervisor may prestore one or more instruction groups, each instruction group may include at least one hardware instruction, and each instruction group is used to perform an operation of zeroing a physical memory page (that is, the specified hardware instruction).

The hypervisor may compare the translated hardware instruction with the stored instruction group. If several consecutive hardware instructions (that is, the third hardware instruction) obtained through translation match an instruction group, the hypervisor may determine that the several hardware instructions are hardware instructions used to zero a physical memory page. The hypervisor may further determine a target page to be zeroed by the several hardware instructions, and notify the HostOS of a physical address (which may be a page-start physical address or a physical address range) of the target page. The HostOS may perform subsequent marking on the target page.

The following provides an example of an instruction group that can be used to zero a physical memory page:

```
          loop: MOVNTPS 0x0(%ecx),%xmm0
                MOVNTPS 0x10(%ecx),%xmm0
                MOVNTPS 0x20(%ecx),%xmm0
                MOVNTPS Ox30(%ecx),%xmm0
                ADD %ecx,$0x40
                DEC %edx
                JNZ loop
```

The foregoing instruction group is used to perform an operation of writing a same value into consecutive addresses of the memory. The register %xmm0 records a written value. The value may be set to 0. The register %ecx records a starting address of the write operation. The starting address may be set to a start address of a page. The register %edx records a quantity of loops. The first four instructions in the instruction group are sequentially executed once in each loop to write 0 into 64 bytes. After 64 loops, a page of 4096 bytes can be zeroed.

The following provides another example of an instruction group that can be used to zero a physical memory page:

```
          loop: <REXW> MOVNTI (%rcx),%rax
                <REXW> MOVNTI 0x8(%rcx),%rax
                <REXW> MOVNTI 0x10(%rcx),%rax
                <REXW> MOVNTI 0x18(%rcx),%rax
                <REXW> MOVNTI 0x20(%rcx),%rax
                <REXW> MOVNTI 0x28(%rcx),%rax
                <REXW> MOVNTI 0x30(%rcx),%rax
                <REXW> MOVNTI 0x38(%rcx),%rax
                <REXW> ADD %rcx,$0x80
                <REXW> MOVNTI 0xc0(%rcx),%rax
                <REXW> MOVNTI 0xc8(%rcx),%rax
                <REXW> MOVNTI 0xd0(%rcx),%rax
                <REXW> MOVNTI 0xd8(%rcx),%rax
                <REXW> MOVNTI 0xe0(%rcx),%rax
                <REXW> MOVNTI 0xe8(%rcx),%rax
                <REXW> MOVNTI 0xf0(%rcx),%rax
                <REXW> MOVNTI 0xf8(%rcx),%rax
                <REXW> DEC %rdx
                JNZ loop
```

A principle of the instruction group in this example is similar to a principle of the instruction group in the foregoing example, and details are not described herein again.

Manner 2: Instruction matching in combination with input parameter determining: determining that the third hardware instruction is the same as the specified hardware instruction; determining a page zeroing determining condition corresponding to the specified hardware instruction; and when a current input parameter of the third hardware instruction meets the page zeroing determining condition, determining that the third hardware instruction is a hardware instruction used to zero a physical memory page.

Processing for performing instruction matching is similar to that in Manner 1. Refer to content in Manner 1. For the processing of the input parameter determining, for all the pre-stored instruction groups, a correspondence table between the instruction group and the page zeroing determining condition may be pre-established, and the input parameter determining is performed based on the correspondence table. Corresponding processing is similar to the input parameter determining in step 602, %ecx is similar to *s, %xmm0 is similar to c, and %edx is similar to n. Therefore, for a specific processing manner, refer to related description content in step 602.

In embodiments of the present disclosure, a detailed processing procedure of Manner 4 of step 401 is shown in FIG. 8, and may include the following steps.

801: In the process of executing the guest code, the processor determines that the fourth hardware instruction to be executed is a hardware instruction used to zero a physical memory page, and debugs the fourth hardware instruction, so that the hypervisor obtains the fourth hardware instruction.

The processor obtains one by one hardware instructions to be executed, and detects a hardware instruction used to zero a physical memory page. The detection processing is similar to that in step 602. For details, refer to related description content in step 602. When it is detected that the fourth hardware instruction is a hardware instruction used to zero a physical memory page, a debug flag may be added to the fourth hardware instruction, to reject execution of the fourth hardware instruction. In this case, a mechanism of the hardware-assisted virtualization technology is triggered, so that the hypervisor learns the rejected fourth hardware instruction and a rejection reason.

802: The hypervisor determines the target page to be zeroed using the fourth hardware instruction and notifies the HostOS.

The hypervisor ensures normal execution of the fourth hardware instruction based on the mechanism of the hardware-assisted virtualization technology, and further, the hypervisor determines, based on the input parameter of the fourth hardware instruction, the target page to be zeroed, and notifies the HostOS.

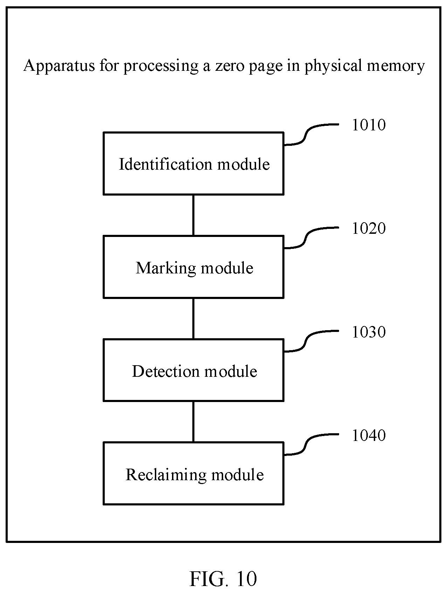

Based on a same technical concept, embodiments of the present disclosure provide an apparatus for processing a zero page in physical memory. The apparatus is applied to the computer device. As shown in FIG. 10, the apparatus includes the following modules.

An identification module 1010 is configured to identify an operation for generating a zero page, where the zero page is a physical memory page containing data that is all zeros. Specifically, processing functions of the foregoing steps 401, 501 to 503, 601 and 602, 701 and 702, and 801 and 802, and other implicit steps may be implemented.

A marking module 1020 is configured to determine the zero page corresponding to the operation, and mark the zero page with a zero-page flag. Specifically, processing functions of the foregoing step 402 and other implicit steps may be implemented.

A detection module 1030 is configured to detect, in physical memory pages, the page marked with the zero-page flag. Specifically, processing functions of the foregoing step 403 and other implicit steps may be implemented.

A reclaiming module 1040 is configured to reclaim the page marked with the zero-page flag, where the reclaiming is setting the page to an unallocated state. The page marked with the zero-page flag is reclaimed. Specifically, processing functions of the foregoing step 404 and other implicit steps may be implemented.

In a possible implementation, the reclaiming module 1040 is configured to decrease a reference count of the page marked with the zero-page flag by a first value, where the reference count indicates a quantity of entities that use the page, and the entity includes a process and/or a thread; and if the decreased reference count is equal to a second value, reclaim the page marked with the zero-page flag.

In a possible implementation, the identification module 1010 is configured to identify execution of a first hardware instruction, where the first hardware instruction is a hardware instruction used to zero a physical memory page.

In a possible implementation, the identification module 1010 is further configured to: obtain, in a process of compiling guest code, a first code segment currently to be compiled; and if the first code segment is identified as a code segment used to zero a physical memory page, compile the first code segment into the first hardware instruction.

In a possible implementation, the first code segment is a first function, a function name of the first function is a specified function name, and a function corresponding to the specified function name is a function used to zero a physical memory page.

In a possible implementation, the identification module 1010 is configured to identify and invoke a second code segment, where the second code segment is a code segment used to zero a physical memory page.

In a possible implementation, the second code segment is a second function, a function name of the second function is a specified function name, and a function corresponding to the specified function name is a function used to zero a physical memory page; or the second code segment is a second function, a function name of the second function is a specified function name, and a current input parameter of the second function meets a page zeroing determining condition corresponding to the specified function name.

In a possible implementation, the identification module 1010 is configured to identify and translate a second hardware instruction provided by a guest operating system to obtain a third hardware instruction, where the third hardware instruction is a hardware instruction used to zero a physical memory page.

In a possible implementation, the third hardware instruction is a specified hardware instruction, and a current input parameter of the third hardware instruction meets a page zeroing determining condition corresponding to the specified hardware instruction; or the third hardware instruction is a specified hardware instruction, and the specified hardware instruction is a hardware instruction used to zero a physical memory page.

In a possible implementation, the identification module 1010 is configured to identify and obtain a fourth hardware instruction to be executed, where the fourth hardware instruction is a hardware instruction used to zero a physical memory page.

In a possible implementation, the fourth hardware instruction is a specified hardware instruction, and a current input parameter of the fourth hardware instruction meets a page zeroing determining condition corresponding to the specified hardware instruction; or the fourth hardware instruction is a specified hardware instruction, and the specified hardware instruction is a hardware instruction used to zero a physical memory page.

In a possible implementation, the zero-page flag is marked in a nested page table of the zero page.

In a possible implementation, the marking module 1020 is further configured to: when a write operation on the zero page is detected, cancel the zero-page flag for marking the zero page .

In a possible implementation, the marking module 1020 is further configured to set a dirty bit corresponding to the zero page in the nested page table to an unset state, where the dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state; and the marking module 1020 is configured to: when it is detected that the dirty bit is set to the set state, cancel the zero-page flag for marking the zero page.

In a possible implementation, the marking module 1020 is further configured to: after the zero page corresponding to the operation is determined, set a dirty bit corresponding to the zero page in the nested page table to an unset state, where the dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state; and the reclaiming module 1040 is configured to reclaim the page marked with the zero-page flag on a basis that the dirty bit, in the nested page table, corresponding to the page marked with the zero-page flag has not changed to the set state.

The identification module 1010, the marking module 1020, the detection module 1030, and the reclaiming module 1040 may be implemented by a processor, or may be implemented by a processor in cooperation with a memory and a communication component.

In embodiments of the present disclosure, when an operation for generating a zero page is identified, the zero page corresponding to the operation is determined, and the zero page is marked. In addition, a page with a zero-page flag is detected in physical memory pages and is reclaimed. Therefore, corresponding physical memory may be released to reduce physical memory usage, thereby preventing host operation lag.

When the apparatus for processing a zero page in physical memory provided in the foregoing embodiments performs processing, the division of the foregoing functional modules is only an example for description. During actual application, the foregoing functions may be allocated to different functional modules as required. That is, the internal structure of the terminal device is divided into different functional modules, to complete all or some functions described above. In addition, the apparatuses for processing a zero page in physical memory provided in the foregoing embodiments and the embodiments of the method for processing a zero page in physical memory belong to a same concept. For specific implementation processes thereof, refer to the method embodiments. Details are not described herein again.

Embodiments of the present disclosure further provide a computer-readable storage medium. The computer-readable storage medium may be any usable medium that can be stored in a computing device, or a data storage device like a data center, including one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid-state disk), or the like. The computer-readable storage medium includes instructions. The instructions instruct the computing device to perform the service processing method, or instruct the computing device to perform the service processing method.

Finally, it should be noted that the foregoing embodiments are merely intended to describe the technical solutions of the present disclosure, rather than to limit the present disclosure. Although the present disclosure is described in detail with reference to the foregoing embodiments, a person of ordinary skill in the art should understand that modifications to the technical solutions described in the foregoing embodiments or equivalent replacements to some technical features thereof may be made without departing from the scope of protection of the technical solutions of embodiments of the present disclosure.

## Claims

1. A method for processing a zero page in physical memory, wherein the method comprises:
identifying an operation for generating a zero page, wherein the zero page is a physical memory page containing data that is all zeros;
determining the zero page corresponding to the operation, and marking the zero page with a zero-page flag;
detecting, in physical memory pages, the page marked with the zero-page flag; and
reclaiming the page marked with the zero-page flag, wherein the reclaiming is setting the page to an unallocated state.

2. The method according to claim 1, wherein reclaiming the page marked with the zero-page flag comprises:
decreasing a reference count of the page marked with the zero-page flag by a first value, wherein the reference count indicates a quantity of entities that use the page, and the entity comprises a process and/or a thread; and
if the decreased reference count is equal to a second value, reclaiming the page marked with the zero-page flag.

3. The method according to claim 1 or 2, wherein the operation for generating the zero page comprises:
executing a first hardware instruction, wherein the first hardware instruction is a hardware instruction used to zero a physical memory page.

4. The method according to claim 3, wherein before identifying the operation for generating the zero page, the method further comprises:
obtaining, in a process of compiling guest code, a first code segment currently to be compiled; and
if the first code segment is identified as a code segment used to zero a physical memory page, compiling the first code segment into the first hardware instruction.

5. The method according to claim 4, wherein the first code segment is a first function, a function name of the first function is a specified function name, and a function corresponding to the specified function name is a function used to zero a physical memory page.

6. The method according to claim 1 or 2, wherein the operation for generating the zero page comprises:
invoking a second code segment, wherein the second code segment is a code segment used to zero a physical memory page.

7. The method according to claim 6, wherein the second code segment is a second function, a function name of the second function is a specified function name, and a function corresponding to the specified function name is a function used to zero a physical memory page; or
the second code segment is a second function, a function name of the second function is a specified function name, and a current input parameter of the second function meets a page zeroing determining condition corresponding to the specified function name.

8. The method according to claim 1 or 2, wherein the operation for generating the zero page comprises:
translating a second hardware instruction provided by a guest operating system to obtain a third hardware instruction, wherein the third hardware instruction is a hardware instruction used to zero a physical memory page.

9. The method according to claim 8, wherein the third hardware instruction is a specified hardware instruction, and a current input parameter of the third hardware instruction meets a page zeroing determining condition corresponding to the specified hardware instruction; or
the third hardware instruction is a specified hardware instruction, and the specified hardware instruction is a hardware instruction used to zero a physical memory page.

10. The method according to claim 1 or 2, wherein the operation for generating the zero page comprises:
obtaining a fourth hardware instruction to be executed, wherein the fourth hardware instruction is a hardware instruction used to zero a physical memory page.

11. The method according to claim 10, wherein the fourth hardware instruction is a specified hardware instruction, and a current input parameter of the fourth hardware instruction meets a page zeroing determining condition corresponding to the specified hardware instruction; or
the fourth hardware instruction is a specified hardware instruction, and the specified hardware instruction is a hardware instruction used to zero a physical memory page.

12. The method according to any one of claims 1 to 11, wherein the zero-page flag is marked in a nested page table of the zero page.

13. The method according to any one of claims 1 to 12, wherein before detecting, in the physical memory pages, the page marked with the zero-page flag, the method further comprises:
after the zero page is marked with the zero-page flag, when a write operation on the zero page is detected, canceling the zero-page flag marking the zero page.

14. The method according to claim 13, wherein after determining the zero page corresponding to the operation, the method further comprises:
setting a dirty bit corresponding to the zero page in the nested page table to an unset state, wherein the dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state; and
canceling the zero-page flag for marking the zero page, when the write operation on the zero page is detected comprises:
when it is detected that the dirty bit is set to the set state, canceling the zero-page flag for marking the zero page.

15. The method according to any one of claims 1 to 12, wherein after determining the zero page corresponding to the operation, the method further comprises:
setting a dirty bit corresponding to the zero page in the nested page table to an unset state, wherein the dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state; and
reclaiming the page marked with the zero-page flag comprises:
reclaiming the page marked with the zero-page flag on a basis that the dirty bit, in the nested page table, corresponding to the page marked with the zero-page flag has not changed to the set state.

16. An apparatus for processing a zero page in physical memory, wherein the apparatus comprises:
an identification module, configured to identify an operation for generating a zero page, wherein the zero page is a physical memory page containing data that is all zeros;
a marking module, configured to determine the zero page corresponding to the operation, and mark the zero page with a zero-page flag;
a detection module, configured to detect, in physical memory pages, the page marked with the zero-page flag; and
a reclaiming module, configured to reclaim the page marked with the zero-page flag, wherein the reclaiming is setting the page to an unallocated state.

17. The apparatus according to claim 16, wherein the reclaiming module is configured to:
decrease a reference count of the page marked with the zero-page flag by a first value, wherein the reference count indicates a quantity of entities that use the page, and the entity comprises a process and/or a thread; and
if the decreased reference count is equal to a second value, reclaim the page marked with the zero-page flag.

18. The apparatus according to claim 16 or 17, wherein the identification module is configured to:
identify execution of a first hardware instruction, wherein the first hardware instruction is a hardware instruction used to zero a physical memory page.

19. The apparatus according to claim 18, wherein the identification module is further configured to:
obtain, in a process of compiling guest code, a first code segment currently to be compiled; and
if the first code segment is identified as a code segment used to zero a physical memory page, compile the first code segment into the first hardware instruction.

20. The apparatus according to claim 19, wherein the first code segment is a first function, a function name of the first function is a specified function name, and a function corresponding to the specified function name is a function used to zero a physical memory page.

21. The apparatus according to claim 16 or 17, wherein the identification module is configured to:
identify and invoke a second code segment, wherein the second code segment is a code segment used to zero a physical memory page.

22. The apparatus according to claim 21, wherein the second code segment is a second function, a function name of the second function is a specified function name, and a function corresponding to the specified function name is a function used to zero a physical memory page; or
the second code segment is a second function, a function name of the second function is a specified function name, and a current input parameter of the second function meets a page zeroing determining condition corresponding to the specified function name.

23. The apparatus according to claim 16 or 17, wherein the identification module is configured to:
identify and translate a second hardware instruction provided by a guest operating system to obtain a third hardware instruction, wherein the third hardware instruction is a hardware instruction used to zero a physical memory page.

24. The apparatus according to claim 23, wherein the third hardware instruction is a specified hardware instruction, and a current input parameter of the third hardware instruction meets a page zeroing determining condition corresponding to the specified hardware instruction; or
the third hardware instruction is a specified hardware instruction, and the specified hardware instruction is a hardware instruction used to zero a physical memory page.

25. The apparatus according to claim 16 or 17, wherein the identification module is configured to:
identify and obtain a fourth hardware instruction to be executed, wherein the fourth hardware instruction is a hardware instruction used to zero a physical memory page.

26. The apparatus according to claim 25, wherein the fourth hardware instruction is a specified hardware instruction, and a current input parameter of the fourth hardware instruction meets a page zeroing determining condition corresponding to the specified hardware instruction; or
the fourth hardware instruction is a specified hardware instruction, and the specified hardware instruction is a hardware instruction used to zero a physical memory page.

27. The apparatus according to any one of claims 16 to 26, wherein the zero-page flag is marked in a nested page table of the zero page.

28. The apparatus according to any one of claims 16 to 27, wherein the marking module is further configured to: when a write operation on the zero page is detected, cancel the zero-page flag for marking the zero page .

29. The apparatus according to claim 28, wherein the marking module is further configured to:
set a dirty bit corresponding to the zero page in the nested page table to an unset state, wherein the dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state; and
the marking module is configured to:
when it is detected that the dirty bit is set to the set state, cancel the zero-page flag for marking the zero page.

30. The apparatus according to any one of claims 16 to 27, wherein the marking module is further configured to:
after the zero page corresponding to the operation is determined, set a dirty bit corresponding to the zero page in the nested page table to an unset state, wherein the dirty bit is a parameter bit indicating whether a write operation has been performed on a corresponding page, and if the dirty bit that has been set to the unset state changes from the unset state to a set state, it indicates that a write operation has been performed on the page corresponding to the dirty bit after the dirty bit is set to the unset state; and
the reclaiming module is configured to:
reclaim the page marked with the zero-page flag on a basis that the dirty bit, in the nested page table, corresponding to the page marked with the zero-page flag has not changed to the set state.

31. A computer device, wherein the computer device comprises a memory and a processor, and the memory is configured to store computer instructions; and
the processor executes the computer instructions stored in the memory, to cause the computer device to perform the method according to any one of claims 1 to 15.

32. A mobile terminal, wherein the mobile terminal comprises a memory and a processor, and the memory is configured to store computer instructions; and
the processor executes the computer instructions stored in the memory, to cause the mobile terminal to perform the method according to any one of claims 1 to 15.

33. A computer-readable storage medium, wherein the computer-readable storage medium stores computer program code, and when the computer program code is executed by a computer device, the computer device performs the method according to any one of claims 1 to 15.
